# EUROPÄISCHE PATENTSCHRIFT

(11) **EP 0 814 628 B1**
(45) Veröffentlichungstag und Bekanntmachung des Hinweises auf die Patenterteilung: **06.08.2003**
(21) Anmeldenummer: 97105839.1
(22) Anmeldetag: 09.04.1997
(51) Int. Cl.: H04Q 9/00, H04B 7/26

(54) **Vorrichtung und Verfahren zur mobilen Kommunikation von Arbeitsmaschinen**
Apparatus and method for working machines mobile communication
Appareil et méthode pour la communication mobile de machines de travail

(30) Priorität: 17.06.1996 DE 19624019
(43) Veröffentlichungstag der Anmeldung: 29.12.1997
(73) Patentinhaber: CLAAS KGaA, 33428 Harsewinkel (DE)
(72) Erfinder: Autermann, Ludger, 48327 Drensteinfurt (DE); Böttinger, Stefan, Dr., 33647 Bielefeld (DE); Klasbrummel, Klaudia, 33415 Verl (DE); Kollmeier, Klaus, 48159 Münster (DE); Oetzel, Kai, 33824 Werther (DE); Schligten, Ernst-Josef, 48361 Beelen (DE); Steckel, Thilo, 33428 Harsewinkel (DE); Wippersteg, Hans-Herrmann, 32257 Bünde (DE)

(56) Entgegenhaltungen:
- EP-A- 0 679 006
- WO-A-94/15413
- DE-A- 19 514 223
- DE-A- 19 545 767

## Beschreibung

Die Erfindung betrifft eine Vorrichtung sowie ein Verfahren zur mobilen Kommunikation von Arbeitsmaschinen, bestehend aus einem mit einer Arbeitsmaschine verbundenen ersten Computerterminal, einer Terminalsoftware, einer mit dem Computerterminal verbundenen Kommunikationsschnittstelle mit einem Datenfunkinterface, sowie einem zweiten Computerminal, einer Terminalsoftware, einer mit dem Computerterminal verbundenen Kommunikationsschnittstelle mit einem Datenfunkinterface, wobei die Computerterminals miteinander über Funk Daten austauschen.

Aus der am 17.10.1996 veroffentlichten DE 195 14 223 ist es bekannt, zwischen Arbeitsmaschinen und einem Leitstand in Form eines Leitrechners Daten über Funk auszutauschen. Dazu sind die zur Teilnahme am Datenaustausch vorgesehenen Arbeitsmaschinen sowie der Leitstand jeweils mit einem Computerterminal sowie zugehöriger Terminalsoftware, einer mit dem Computerterminal verbundenen Kommunikationsschnittstelle mit einem Datenfunkinterface und geeigneten Funkgeräten und -antennen zur Funkübertragung der Nutzdaten ausgestattet. In der genannten Schrift wird stillschweigend vorausgesetzt, daß sich die Funkübertragung eines einzigen Kommunikationsverfahrens bedient. In der Praxis zeigt sich jedoch, daß es verschiedene Kommunikationsverfahren gibt wie beispielsweise Modacom, Mobitex, GSM, SMS, Betriebs- oder Bündelfunk, die unter jeweils vorgegebenen Betriebsbedingungen Vorteile, aber auch Nachteile aufweisen können. So kann es passieren, daß aufgrund geographischer oder baulicher Gegebenheiten oder wegen Bewuchses mit Bäumen die Funkkommunikation gestört ist, keine freie Leitung erreichbar ist, aufgrund der physikalischen Eigenschaften des Übertragungsverfahrens wie beispielsweise der Wellenlänge nur eine beschränkte Menge von Daten in einer bestimmten Zeit übertragen werden kann oder bestimmte Kommunikationsverfahren aufgrund der Gebührenstruktur des Service-Providers teurer sind als andere Verfahren. So ist es wünschenwert, bei der mobilen Kommunikation nicht nur auf ein bestimmtes Kommunikationsverfahren festgelegt zu sein.

Die WO 94/15413 beschreibt ein System und Verfahren zur mobilen Kommunikation zwischen Arbeitsmaschinen und einem zentralrechner, wobei die Kommunikationsschnittstelle der Arbeitsmaschine die Kommunikation in zwei verschiedenen Mobilkommunikationsnetzen mit jeweiligen Übertragungsprotokollen nach den Master / Slave Prinzip ermöglicht.

Es ist deshalb die Aufgabe der vorliegenden Erfindung, eine Vorrichtung und ein Verfahren zu schaffen, das eine mobile Kommunikation von Arbeitsmaschinen untereinander oder mit einem Leitstand ermöglicht, das unterschiedliche Kommunikationsverfahren ermöglicht.

Die Aufgabe wird gemäß den kennzeichnenden Merkmalen der Ansprüche 1 und 10 dadurch gelöst, daß die Kommunikationsschnittstellen für die Übertragung von Daten ein standardisiertes Übertragungsprotokoll verwenden und die Kommumkationsschnittstellen jeweils über mehrere standardisierte Übertragungsprotokolle für eine Mehrzahl von Kommunikationsverfahren verfügen und zum gewählten Kommunikationsverfahren das jeweils passende Übertragungsprotokoll verwenden. Die Kommunikationsschnittstelle hat die Funktion, die Nutzdaten in das standardisierte Übertragungsprotokoll des jeweils eingesetzten Kommunikationsverfahrens einzufügen. Bei standardisiertem Übertragungsprotokoll können die in digitaler Form übertragenen Nutzdaten von der empfangenden Einheit verwendungsgerecht zugeordnet und weiterverarbeitet werden. Die mobile Kommunikation kann dabei sowohl zwischen Arbeitsmaschinen untereinander als auch mit einem oder mehreren Leitständen erfolgen.

Die Kommunikationsverfahren, die für die mobile Kommunikation eingesetzt werden, können manuell, beispielsweise durch Betätigen eines Wählschalters, einer Tastatureingabe oder auf sonstige Weise erfolgen. Es ist auch denkbar, die Auswahl nach vorgegebenen Entscheidungsparametern zu automatisieren. Als Entscheidungsparameter kommen dabei Verfügbarkeit einer Funkleitung, Übertragungsqualität, Kosten, übertragbare Datenmenge einzeln oder in Kombination und unterschiedlicher Gewichtung in Betracht, die durch ein entsprechendes Softwareprogramm abgearbeitet werden und wo nach Festlegung für ein Kommunikationsverfahren die Kommunikationsschnittstelle durch eine entsprechende Anweisung das entsprechende standardisierte Übertragungsprotokoll anwendet.

Das definierte Übertragungsprotokoll besteht aus zumindest einem mit zu übertragenden Nutzdaten besetzten Funktionsblock sowie weiteren vor-, zwischen- oder nachgeordneten Funktionsblöcken. Neben dem ersten und zweiten Computerterminal können weitere Computerterminals an der Kommunikation teilnehmen. Eines der Computerterminals kann als Leitstand oder Zentraleinheit für die Kommunikation von oder mit anderen Computerterminals organisiert sein, was bedeutet, daß auf diesem Computerminal bestimmte Anzeige-.

Auswerte-, Befehls- und Kontrollfunktionen vorhanden sind, die über die mobile Kommunikation an eines oder mehrere der an der mobilen Kommunikation teilnehmenden Computerterminals übermittelbar sind. Eines oder mehrere der Computerterminals können wahlweise auch samt Terminalsoftware sowie der Kommunikationsschnittstelle mit Datenfunkinterface lösbar mit der Arbeitsmaschine oder dem Leitstand verbunden sein. Durch ein solches tragbares Computerterminal wird es möglich, ein Computerterminal auf mehreren unterschiedlichen Maschinen zur mobilen Kommunikation zu benutzen.

Das erfindungsgemäße Verfahren besteht aus den Verfahrensschritten, aus mehreren Kommunikationsverfahren eines auszuwählen, die zu übertragenden Nutzdaten von einer Kommunikationsschnittstelle in ein fiir das gewählte Kommunikationsverfahren definiertes Übertragungsprotokoll einzutragen, das definierte Übertragungsprotokoll - beispielhaft für das Modacom-Verfahren - in das vorgegebene Native Link Layer einzupassen und das komplette Native Link Layer an das Empfangsgerät zu übertragen. Für andere Kommunikationsverfahren gilt entsprechendes.

Die Erfindung wird im folgenden anhand eines Ausführungsbeispiels erläutert. Es zeigen:
- Figur 1: einen skizzierten Aufbau einer Vorrichtung zur mobilen Kommunikation von Arbeitsmaschinen,
- Figur 2: einen beispielshaften Aufbau eines Übertragungsprotokolls

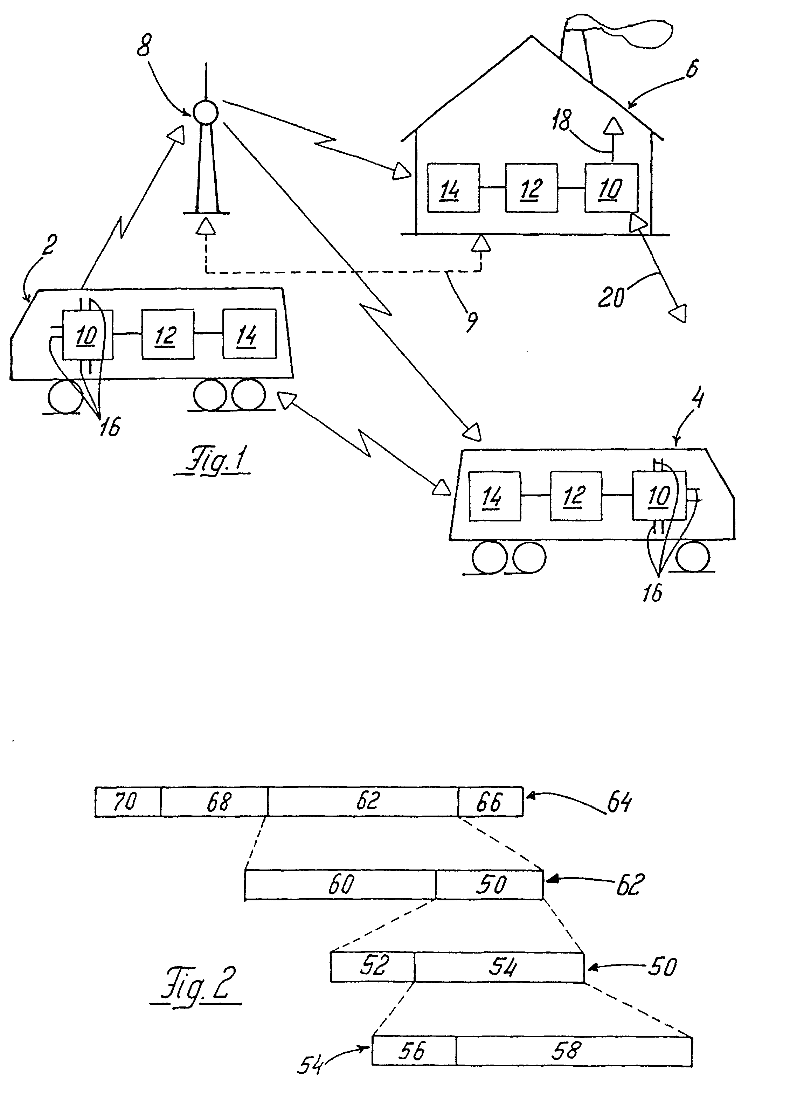

In Figur 1 sind die mobilen Arbeitsfahrzeuge 2, 4 sowie ein Leitstand 6 zu sehen, die direkt oder über eine Funkkommunikationshilfe wie beispielsweise den Funkturm 8 oder auch zumindest teilweise erdgebundene Übertragungsmittel wie Kabel 9 miteinander in Funkverbindung stehen. Als mobile Arbeitsmaschinen kommen einzelne oder beliebig viele Land-, Bau- oder forstwirtschaftliche Fahrzeuge, aber auch Kommunalfahrzeuge, Fahrzeuge von Distributions- und Transportdiensten und sonstigen Anwendungen mit oder ohne angehängter Technik in Betracht. Jede an der mobilen Kommunikation teilnehmende Einheit ist mit einem Computerterminal 10 samt Terminalsoftware, einer damit verbundenen Kommunikationsschnittstelle 12 sowie einem Datenfunkinterface 14 verbunden. Die Computerterminals 10 sind selbst wiederum mit einer Peripherie über eine oder mehrere Verbindungsleitungen 16 verbunden, wobei die Peripherie aus arbeitsmaschinenseitiger Sensorik, Aktorik und/oder Ein- und Ausgabe- sowie Speichermedien bestehen kann. Die im Computerterminal 10 vorhandenen Daten wie beispielsweise die aktuelle Position, Betriebsdaten der Arbeitsmaschine, Füllstände von Betriebsmitteln, Füllstände von Sammelbehältern, Auftragserledigungsstatus, Defektmeldungen, etc. können als Nutzdaten automatisch softwaregesteuert, per Befehl des Bedieners der jeweiligen Arbeitsmaschine oder per Funkfernabfrage für die Übertragung bereitgestellt werden.

In gleicher Weise wie beispielsweise Betriebsdaten von mobilen Einheiten können Anweisungen, Abfragen, Auswertungen, Querverweise oder sonstige Daten in einem Leitstand 6 fiir die Kommunikation mit den mobilen Arbeitsmaschinen 2, 4 für die Kommunikation bereitgestellt werden. Das Computerterminal 10 des Leitstandes 6 verfügt über Leitungen 18 zu daran angeschlossenen, nicht näher dargestellten Ein-/Ausgabe- und/oder Speichermedien oder über Verbindungen 20 zu externen Hostrechnern, auf denen beispielsweise Expertensysteme für den Zugriff durch das Computerterminal 10 des Leistands 6 zur Verfügung stehen.

Nach der Bereitstellung werden die Nutzdaten vom Computerterminal 10 an die Kommunikationsschnittstelle 12 übertragen, die die Nutzdaten durch ein entsprechendes Datenfunkinterface in das für das jeweils gewählte Übertragungsverfahren benötigte Übertragungsprotokoll 50 einträgt. Die Definition eines Übertragungsprotokolls kann verschiedene Bereiche umfassen, die sich begrifflich in zwei Kategorien unterscheiden lassen: so ist es auf der ersten applikationsspezifischen Ebene beispielsweise möglich, den Umfang aller Informationen zu definieren, die übertragen werden können, wie beispielsweise Telemetriedaten, Einsatzstausinformationen, Dispositionsdaten, Prozeßdaten und Informationen zur Kommunikationssteuerung, oder es können Verfahren der Zuordnung digitaler Daten zu einer Information definiert werden wie beispielsweise, an welcher Position im Nutzdatenpaket welche Informationen enthalten sind. Auch kann die Formatierung der Information, wie zum Beispiel binär codiert oder im ASCII-Format, oder die mögliche Übertragungsrichtung für eine Information von einem mobilen Arbeitsfahrzeug zu einem bestimmten anderen mobilen Fahrzeug oder zu einem Leitstand oder von einem Leitstand zu einem oder mehreren bestimmten Arbeitsfahrzeugen festgelegt werden. Auch kann ein Verfahren der Zuordnung einer Information zur sendenden Einheit zur Identifikation beim Empfänger vorgesehen werden. Diese Beispiele der möglichen Definitionen durch ein Übertragungsprotokoll sind nicht erschöpfend, sondern nur beispielhaft gemeint. Diese Definitionen sind unabhängig vom physikalischen Übertragungsverfahren und beziehen sich nur auf die Nutzdaten. Das physikalische Übertragungsverfahren bedingt als zweite Ebene ein kommunikationsverfahrensspezifisches Übertragungsprotokoll, das durch das jeweils gewählte Übertragungsverfahren definiert wird. Das Übertragungsprotokoll wird einem beliebigen physikalischen Übertragungsverfahren aufgesetzt und besitzt keine logische Verbindung zu diesem, wobei vorausgesetzt werden muß, daß das physikalische Übertragungsverfahren paketorientiert ist, wie beispielsweise Modacom oder Mobitex.

In Figur 2 ist ein beispielhafter Aufbau eines applikationsspezifischen Übertragungsprotokolls 50 gezeigt. Das applikationsspezifische Übertragungsprotokoll 50 setzt sich zusammen aus einer Abfolge von Bits, deren jeweiliger laufender Nummer eine bestimmte definierte Bedeutung zugemessen wird. Die Anzahl der Bits, die für ein bestimmtes Element des Übertragungsprotokolls eingesetzt werden, sollte im angemessenen Verhältnis zur Varianz der potentiellen mit der definierten Bitsequenz übertragenen Informationen stehen. Das applikationsspezifische Übertragungsprotokoll 50 stellt den session-layer dar, das sich aufteilt in die Elemente Adresse 52 und Nutzdaten 54. Die Nutzdaten 54 als presentation-layer teilen sich wiederum auf in einen Subkenner 56 sowie in applikationspezifische Daten 58, die den application-layer darstellen. Die Umsetzung der Nutzdaten aus dem Benutzerdialog kann in das applikationsspezifische Übertragungsprotokoll durch eine entsprechend programmierte Software erledigt werden. Außerdem muß das applikationsspezifische Übertragungsprotokoll 50 in einen kommunikationsverfahrensabhängigen, kommunikationsverfahrensspezifischen Übertragungsprotokoll 62, das jeweils spezifisch ist für das gewählte Kommunikationsverfahren, eingebettet werden. Im kommunikationsverfahrenspezifischen Übertragungsprotokoll 62 sind zusätzlich zum applikationsspezfischen Übertragungsprotokoll 50 weitere übertragungsspezifische Daten wie Länge des zu übertragenden Datensatzes, Sender-Identifikation, Übermittlungszeit etc. eingetragen. Beispielhaft fiir das Mndacom-Kommunikationsverfahren wird innerhalb des kommunikationsspezifischen Übertragungsprotokoll 62 der Native Link Layers 64 definiert, in dem weitere Informationsfelder 66, 68 und 70 festgelegt sind. Das in Figur 2 gezeigte Ausführungsbeispiel bezieht sich auf die Ausgestaltung eines applikationsspezifischen Übertragungsprotokolls 50 in einem Modacom-Kommunikationsverfahren, die beschriebene Systematik kann aber von einem Fachmann ohne Schwierigkeiten auf andere Kommunikationsverfahren übertragen werden.

Nachdem das kommunikationsverfahrensspezifische Übertragungsprotokoll 62, 64 vom Datenfunkinterface 14, welches Teil der Kommunikationsschnittstelle 12 ist, bereitgestellt wurde, können die in das kommunikationsspezifische Übertragungsprotkoll 62, 64 eingebetteten Nutzdaten dann über das dem gewählten Kommunikationsverfahren entsprechende Datenfunkmodem bzw. -adapter der oder den Empfangsstellen 14 übertragen werden. Durch die Wahl des Kommunikationsverfahrens kommunizieren die Empfangsstellen 14, die aus der Kommunikationshardware und dem Datenfunkinterface bestehen, über ein kommunikationsverfahrensspezifisches Übertragungsprotokoll 62, welches eine Umsetzung in das applikationsspezifische Übertragungsprotokoll 50 durch die Kommunikationsschnittstelle 12 ermöglicht. Aus dem applikationsspezifischen Übertragungsprotokoll 50 können die Nutzdaten dann ohne Schwierigkeiten herausgelesen werden.

## Patentansprüche

1. Vorrichtung zur mobilen Kommunikation von Arbeitsmaschinen (2, 4), bestehend aus einem mit einer Arbeitsmaschine (2, 4) verbundenen ersten Computerterminal (10), einer Terminalsoftware, einer mit dem Computerterminal (10) verbundenen Kommunikationsschnittstelle (12) mit einem Datenfunkinterface (14), sowie einem zweiten Computerterminal (10), einer Terminalsoftware, einer mit dem Computerterminal (10) verbundenen Kommunikationsschnittstelle (12) mit einem Datenfunkinterface (14), wobei die beiden Computerterminals (10) miteinander über geeignete Funkgeräte und -antennen Daten austauschen,
**dadurch gekennzeichnet,**
**daß** die Kommunikationsschnittstellen (12) für die Übertragung von Daten ein standardisiertes Übertragungsprotokoll (50) verwenden und die Kommunikationsschnittstellen (12) jeweils über mehrere standardisierte Übertragungsprotokolle (50) für eine Mehrzahl von Kommunikationsverfahren verfügen und zum gewählten Kommunikationsverfahren das jeweils passende Übertragungsprotokoll (50) verwenden, wobei die Auswahl des Kommunikationsverfahrens nach Qualitätskriterien erfolgt

2. Vorrichtung nach Anspruch 1,
**dadurch gekennzeichnet,**
**dass** die mobile Kommunikation sowohl zwischen Arbeitsmaschinen (2, 4) untereinander als auch mit einem oder mehreren Leitständen (6) durchgeführt wird.

3. Vorrichtung nach Anspruch 1 oder 2,
**dadurch gekennzeichnet,**
**dass** die Kommunikationsverfahren manuell vorgewählt werden.

4. Vorrichtung nach einem oder mehreren der Ansprüche 1 bis 3,
**dadurch gekennzeichnet,**
**dass** die Kommunikationsverfahren automatisch nach vorgegebenen Auswahlkriterien von einer Steuerungssoftware vorgewählt werden.

5. Vorrichtung nach einem oder mehreren der Ansprüche 1 bis 4,
**dadurch gekennzeichnet,**
**dass** das definierte Übertragungsprotokoll (50) aus zumindest einem mit zu übertragenden Nutzdaten (54) besetzten Funktionsblock sowie weiteren vor-, zwischen- oder nachgeordneten Funktionsblöcken besteht.

6. Vorrichtung nach einem oder mehreren der Ansprüche 1 bis 5,
**dadurch gekennzeichnet,**
**dass** neben dem ersten und zweiten Computerterminal (10) weitere Computerterminals (10) an der Kommunikation teilnehmen.

7. Vorrichtung nach einem oder mehreren der Ansprüche 1 bis 6,
**dadurch gekennzeichnet,**
**dass** eines der Computerterminals (10) als Leitstand (6) oder Zentraleinheit für die Kommunikation von oder mit anderen Computerterminals (10) organisiert ist.

8. Vorrichtung nach einem oder mehreren der Ansprüche 1 bis 7,
**dadurch gekennzeichnet,**
**dass** einer oder mehrere der Computerterminals (10) samt Terminalsoftware sowie der Kommunikationsschnittstelle (12) mit Datenfunkinterface (14) lösbar mit der Arbeitsmaschine (2, 4) verbunden sind.

9. Vorrichtung nach Anspruch 8,
**dadurch gekennzeichnet,**
**dass** das eine oder mehrere der Computerterminals (10) auf unterschiedlichen Arbeitsmaschinen (2, 4) genutzt werden können.

10. Verfahren zur mobilen Kommunikation von Arbeitsmaschinen (2,4), bestehend aus der Bereitstellung von Daten durch ein Computerterminal (10), der Übermittlung an ein Datenfunkinterface (14) und der Datenfunkübertragung durch ein Kommunikationsverfahren auf ein Empfangsgerät,
**dadurch gekennzeichnet,**
**dass** ein Kommunikationsverfahren aus mehreren Kommunikationsverfahren nach Qualitätskriterien ausgewählt wird, die zu übertragenden Nutzdaten (54) von einer Kommunikationsschnittstelle (12) in ein für das gewählte Kommunikationsverfahren definiertes kommunikationsspezifisches Übertragungsprotokoll (50) eingetragen werden, und dieses mittels des gewählten Kommunikationsverfahrens an das Empfangsgerät übertragen wird.

## Claims

1. Apparatus for the mobile communication of working machines (2, 4) comprising a first computer terminal (10) connected to a working machine (2, 4), terminal software, a communication interface (12) which is connected to the computer terminal (10) and having a data radio interface (14), and a second computer terminal (10), terminal software, and a communication interface (12) which is connected to the computer terminal (10) and having a data radio interface (14), wherein the two computer terminals (10) exchange data with each other by way of suitable radio apparatuses and antennas,
**characterised in that**
the communication interfaces (12) for the transmission of data use a standardised transmission protocol (50) and the communication interfaces (12) each have a plurality of standardised transmission protocols (50) for a plurality of communication processes and for the selected communication process use the respectively appropriate transmission protocol (50), wherein the selection of the communication process is effected in accordance with quality criteria.

2. Apparatus according to claim 1 **characterised in that** the mobile communication is implemented both between working machines (2, 4) with each other and also with one or more control stations (6).

3. Apparatus according to claim 1 or claim 2 **characterised in that** the communication processes are preselected manually.

4. Apparatus according to one or more of claims 1 to 3 **characterised in that** the communication processes are preselected automatically by control software in accordance with predetermined selection criteria.

5. Apparatus according to one or more of claims 1 to 4 **characterised in that** the defined transmission protocol (50) comprises at least one function block occupied with useful data (54) to be transmitted as well as further upstream-arranged, interposed or downstream-arranged function blocks.

6. Apparatus according to one or more of claims 1 to 5 **characterised in that** besides the first and second computer terminals (10) further computer terminals (10) participate in the communication.

7. Apparatus according to one or more of claims 1 to 6 **characterised in that** one of the computer terminals (10) is organised as a control station (6) or central unit for the communication from or to other computer terminals (10).

8. Apparatus according to one or more of claims 1 to 7 **characterised in that** one or more of the computer terminals (10) together with terminal software as well as the communication interface (12) with data radio interface (14) are releasably connected to the working machine (2, 4).

9. Apparatus according to claim 8 **characterised in that** the one or more of the computer terminals (10) can be used on different working machines (2, 4).

10. A method of mobile communication of working machines (2, 4) comprising the preparation of data by a computer terminal (10), communication to a data radio interface (14) and data radio transmission by a communication process to a receiving unit,
**characterised in that**
a communication process is selected from a plurality of communication processes in accordance with quality criteria, the useful data (54) to be transmitted are entered by a communication interface (12) into a communication-specific transmission protocol (50) defined for the selected communication process, and said protocol is transmitted to the receiving unit by means of the selected communication process.

## Revendications

1. Dispositif pour la communication mobile de machines de travail (2, 4), comprenant un premier terminal d'ordinateur (10) lié à une première machine de travail (2,4), un logiciel de terminal, une interface de communication (12) liée au terminal d'ordinateur (10) avec une interface de données radio (14), ainsi qu'un deuxième terminal d'ordinateur (10), un logiciel de terminal, une interface de communication (12) liée au terminal d'ordinateur (10) avec une interface de données radio (14), les deux terminaux d'ordinateur (10) échangeant des données l'un avec l'autre par l'intermédiaire d'appareils radio et d'antennes adaptés, **caractérisé en ce que** les interfaces de communication (12) pour la transmission de données utilisent un protocole de transmission standardisé (50) et les interfaces de communication (12) disposent chacune de plusieurs protocole de transmission standardisés (50) pour plusieurs procédés de communication et utilisent chaque fois le protocole de transmission (50) qui est adapté au procédé de communication sélectionné, la sélection du procédé de communication se faisant en fonction de critères de qualité.

2. Dispositif selon la revendication 1, **caractérisé en ce que** la communication mobile est réalisée aussi bien entre des machines de travail (2, 4) qu'avec un ou plusieurs postes de gestion (6).

3. Dispositif selon la revendication 1 ou 2, **caractérisé en ce que** le procédé de communication est présélectionné manuellement.

4. Dispositif selon une ou plusieurs des revendications 1 à 3, **caractérisé en ce que** les procédés de communication sont présélectionnés automatiquement en fonction de critères de sélection prédéfinis, par un logiciel de contrôle.

5. Dispositif selon une ou plusieurs des revendications 1 à 4, **caractérisé en ce que** le protocole de transmission (50) défini comprend au moins un bloc fonctionnel occupé par des données utiles (54) à transmettre et des blocs fonctionnels supplémentaires disposés avant, entre ou après.

6. Dispositif selon une ou plusieurs des revendications 1 à 5, **caractérisé en ce qu'**en plus des premier et deuxième terminaux d'ordinateur (10), des terminaux d'ordinateur (10) supplémentaires participent à la communication.

7. Dispositif selon une ou plusieurs des revendications 1 à 6, **caractérisé en ce que** l'un des terminaux d'ordinateur (10) est organisé en poste de gestion (6) ou en unité centrale pour la communication de ou avec d'autres terminaux d'ordinateur (10).

8. Dispositif selon une ou plusieurs des revendications 1 à 7, **caractérisé en ce qu'**un ou plusieurs des terminaux d'ordinateur (10), avec le logiciels de terminal, l'interface de communication (12) et l'interfaçage données radio (14) sont reliés de manière séparable à la machine de travail (2, 4).

9. Dispositif selon la revendication 8, **caractérisé en ce qu'**un ou plusieurs des terminaux d'ordinateur (10), peuvent être utilisés sur des machines de travail (2, 4) différentes.

10. Procédé pour la communication mobile de machines de travail (2, 4), comprenant la préparation de données par un terminal d'ordinateur (10), la transmission à une interface de données radio (14) et la transmission des données radio par un procédé de communication sur un appareil récepteur, **caractérisé en ce qu'**un procédé de communication est sélectionné parmi plusieurs procédés de communication en fonction de critères de qualité, les données utiles (54) à transmettre sont intégrées par une interface de communication (12) dans un protocole de transmission (50) défini, spécifique du procédé de communication sélectionné et le protocole de transmission est transmis à l'appareil récepteur à l'aide du procédé de communication sélectionné.
